# EUROPÄISCHE PATENTANMELDUNG

(11) **EP 0 774 480 A1**
(43) Veröffentlichungstag der Anmeldung: **21.05.1997**
(21) Anmeldenummer: 96117909.0
(22) Anmeldetag: 08.11.1996
(51) Int. Cl.: C08G 69/28, C08G 69/02, C08G 69/46

(54) **Verfahren zur Herstellung von verzweigten Polyamiden**

(30) Priorität: 18.11.1995 DE 19543161
(71) Anmelder: BASF AKTIENGESELLSCHAFT, 67056 Ludwigshafen (DE)
(72) Erfinder: Fisch, Herbert, Dr., 67157 Wachenheim (DE); Pipper, Gunter, 67098 Bad Dürkheim (DE); Rieger, Jens, Dr., 67069 Ludwigshafen (DE); Laun, Martin, Dr., 67061 Ludwigshafen (DE); Warzelhan, Volker, Dr., 67273 Weisenheim (DE)

(57) **Zusammenfassung**

Verfahren zur Herstellung von verzweigten Polyamiden, dadurch gekennzeichnet, daß man
A) 10 bis 99,7 Gew.-% einer Schmelze eines Polyamidpräpolymeren mit einer Viskositätszahl von 40 bis 90 ml/g
   mit
B) 0,3 bis 6 Gew.-% einer mehrfunktionellen Carbonsäure, wobei die Anzahl n der freien Carbonsäuregruppen 3 < n < 10 beträgt,
   sowie
C) 0 bis 80 Gew.-% weiterer Zusatzstoffe und Verarbeitungshilfsmittel
   mischt und anschließend in fester Phase nachkondensiert, wobei die Gewichtsprozente der Komponenten A) bis C) zusammen 100 % ergeben.

## Beschreibung

Die Erfindung betrifft ein verbessertes Verfahren zur Herstellung von verzweigten Polyamiden, insbesondere mit hohem Molekulargewicht.

Aus der US-A 4,599,400 und J.M. Warakomski, Polymer Prepints, 30 (1), S.117-118 sind sternförmige Polyamidstrukturen auf der Basis von Polyamid 6 bekannt. Als Verzweigermolekül dienen hier Dendrimere mit Aminogruppen, insbesondere mit 6 Aminofunktionen.

Die Herstellung erfolgt durch kationisch gestartete ringöffnende Polymerisation von ε-Caprolactam, wobei die Dendrimere der Monomerenlösung vor der Polymerisation zugegeben werden.

Aus der DE-A 4 312 182 sind verzweigte Polyamide bekannt, welche mittels aromatischen Carbonsäuren mit mehreren freien Carboxylfunktionen hergestellt werden. Die Herstellung erfolgt durch Schmelzekondensation des mehrfunktionellen Verzweigermoleküls mit den Monomeren, z.B. ε-Caprolactam. Man erhält ausschließlich vernetzte, nicht mehr verarbeitbare Polyamide. Ein ähnliches Verfahren ist aus der EP-A 345 648 bekannt.

Aus der EP-A 672 703 ist bekannt, Verzweiger mit Polyamiden vorzumischen und in üblicher Weise zu konfektionieren. Nachteil der aus dem Stand der Technik bekannten Verfahren ist der statistische Einbau der mehrfunktionellen Verbindungen in die Polyamidkette. Bei den resultierenden verzweigten Polyamiden entstehen in Abhängigkeit von der Anzahl der reaktiven Gruppen nach der Polymerisation nicht steuerbare Molekulargewichte.

Weiterhin werden durch den statistischen Einbau der Verzweiger die Kristallisationseigenschaften der Polyamide beeinflußt, die Gesamtkristallinität wird abgesenkt. Dies führt zu einer Verschlechterung der mechanischen Eigenschaften, insbesondere der Steifigkeit.

Wünschenswert wäre die Kombination von hoher Steifigkeit mit einem besseren Fließverhalten (im Vergleich zu den reinen Polyamiden) bei der Verarbeitung.

Aufgabe der vorliegenden Erfindung war es daher, ein einfach durchzuführendes Verfahren zur Herstellung von verzweigten Polyamiden zur Verfügung zu stellen, nach welchem die vorstehend geschilderten Nachteile vermieden werden können.

Diese Aufgabe wird erfindungsgemäß durch das Verfahren gemäß Anspruch 1 gelöst, wobei man
A) 10 bis 99,7 Gew.-% einer Schmelze eines Polyamidpräpolymeren mit einer Viskositätszahl von 40 bis 90 ml/g
   mit
B) 0,3 bis 6 Gew.-% einer mehrfunktionellen Carbonsäure, wobei die Anzahl n der freien Carbonsäuregruppen 3 ≤ n ≤ 10 beträgt,
   sowie
C) 0 bis 80 Gew.-% weiterer Zusatzstoffe und Verarbeitungshilfsmittel
   mischt und anschließend in fester Phase nachkondensiert, wobei die Gewichtsprozente der Komponenten A) bis C) zusammen 100 % ergeben.

Nach diesem Verfahren sind auf einfache Weise verzweigte Polyamide, insbesondere mit hohem und steuerbarem Molekulargewicht zugänglich, welche eine gute Fließfähigkeit bei gleichzeitigem Erhalt der Gesamtkristallinität aufweisen und somit gute mechanische Eigenschaften, insbesondere eine gute Steifigkeit zeigen.

In der ersten Stufe des erfindungsgemäßen Verfahrens wird eine Schmelze von in einer geeigneten Plastifiziereinrichtung von 10 bis 99,7 Gew.-%, vorzugsweise von 40 bis 99,6 und insbesondere 60 bis 99,5 Gew.-% eines Polyamidpräpolymeren mit einer Viskositätszahl von 40 bis 80 ml/g, bevorzugt 50 bis 75 ml/g hergestellt. Die Viskositätszahl wird gemäß ISO 1628 an einer 0,5 gew.-%igen Lösung in konzentrierter Schwefelsäure bei 23°C bestimmt.

Als Polyamide, die zur Herstellung der Komponente A) verwendet werden können, sind thermoplastische teilkristalline Polyamide zu nennen.

Geeignete Polyamide können z.B. durch Kondensation äquimolarer Mengen einer gesättigten Dicarbonsäure mit 4 bis 12 Kohlenstoffatomen mit einem Diamin, welches 4 bis 14 Kohlenstoffatome aufweist oder durch Kondensation von ω-Aminocarbonsäuren oder Polyaddition von Lactamen hergestellt werden.

Beispiele für Polyamide sind Polyhexamethylenadipinsäureamid, Polyhexamethylenazelainsäureamid, Polyhexamethylensebacinsäureamid, Polyhexamethylendodecandisäureamid, Polytetramethylenadipinsäureamid und die durch Ringöffnung von Lactamen erhaltenen Polyamide wie Polycaprolactam und Polylaurinsäurelactam.

In der Regel sind diese teilkristallinen Polyamide linear.

Besonders bevorzugt sind Polytetramethylenadipinsäureamid, Polyhexamethylenadipinsäureamid, Polyhexamethylensebacinsäureamid und Polycaprolactam sowie Copolyamide aus Terephthalsäure, Hexamethylendiamin und ε-Caprolactam oder aus Terephthalsäure, Isophthalsäure, ggf. Adipinsäure und Hexamethylendiamin mit mehr als 50 Gew.-% Terephthalsäure/Hexamethylendiamin-Einheiten; insbesondere Polyhexamethylenadipinsäureamid und Polycaprolactam. Es können jedoch auch Mischungen verschiedener Polyamide verwendet werden.

Die Herstellung der Polyamid-Präpolymeren mit einer Viskositätszahl von 40 bis 80 ml/g kann nach den in den EP-A 129 195 und 129 196 beschriebenen Verfahren erfolgen.

Gemäß diesen Verfahren wird eine wäßrige Lösung der Monomeren unter erhöhtem Druck und unter gleichzeitiger Verdampfung von Wasser und Bildung eines Präpolymeren auf eine Temperatur von 250 bis 300°C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 250 bis 300°C polykondensiert. Wesentlich ist bei dem Verfahren, daß die wäßrige Salzlösung unter einem Überdruck von 1 bis 10 bar innerhalb einer Verweilzeit von weniger als 60 Sekunden erhitzt wird, wobei bei Austritt aus der Verdampferzone der Umsetzungsgrad vorteilhaft mindestens 93 % und der Wassergehalt des Präpolymeren höchstens 7 Gew.-% beträgt.

Durch diese kurzen Verweilzeiten wird die Bildung von Triaminen weitgehend verhindert.

Die verwendeten wäßrigen Lösungen haben in der Regel einen Monomergehalt von 30 bis 70 Gew.-%, insbesondere von 40 bis 65 Gew.-%.

Die wäßrige Salzlösung wird vorteilhaft mit einer Temperatur von 50 bis 100°C kontinuierlich in eine Verdampferzone geleitet, wo die wäßrige Salzlösung unter einem Überdruck von 1 bis 10, vorzugsweise von 2 bis 6 bar auf eine Temperatur von 250 bis 330°C erhitzt wird. Es versteht sich, daß die angewandte Temperatur über dem Schmelzpunkt des jeweils herzustellenden Polyamids liegt.

Wie bereits erwähnt, ist es wesentlich, daß die Verweilzeit in der Verdampferzone maximal 60 Sekunden, vorzugsweise 10 bis 55 Sekunden und insbesondere 10 bis 40 Sekunden beträgt.

Der Umsatz beim Austritt aus der Verdampferzone beträgt mindestens 93, vorzugsweise 95 bis 98 % und der Wassergehalt liegt vorzugsweise im Bereich von 2 bis 5, insbesondere 1 bis 3 Gew.-%.

Die Verdampferzone ist vorteilhaft als Röhrenbündel ausgebildet. Besonders bewährt haben sich Röhrenbündel, in denen der Querschnitt der einzelnen Röhren periodisch wiederkehrend rohrförmig und spaltförmig ausgebildet ist.

Ferner hat es sich als vorteilhaft erwiesen, das Gemisch aus Präpolymeren und Dampf vor der Trennung der Phasen unmittelbar nach der Verdampferzone durch eine röhrenförmige Stoffaustauschzone, die mit Einbauten versehen ist, zu leiten. Hierbei hält man die in der Verdampferzone angewandten Temperaturen und Druckbedingungen ein. Die Einbauten, z.B. Füllkörper wie Raschigringe, Metallringe oder insbesondere Füllkörper aus Drahtnetz, bewirken eine große Oberfläche. Hierdurch werden die Phasen, d.h. Präpolymeres und Dampf, innig in Berührung gebracht. Dies bewirkt, daß die Menge des mit Wasserdampf freigesetzten Diamins erheblich vermindert wird. In der Regel hält man in der Stoffaustauschzone eine Verweilzeit von 1 bis 15 Minuten ein. Die Stoffaustauschzone ist vorteilhaft als Röhrenbündel ausgebildet.

Das aus der Verdampferzone bzw. Stoffaustauschzone austretende zweiphasige Gemisch aus Dampf und Präpolymeren wird getrennt. Die Trennung erfolgt in der Regel von selbst aufgrund der physikalischen Unterschiede in einem Gefäß, wobei der untere Teil des Gefäßes vorteilhaft als Polymerisationszone ausgebildet ist. Die freiwerdenden Brüden bestehen im wesentlichen aus Wasserdampf und Diaminen, die bei dem Verdampfen des Wassers freigesetzt wurden. Diese Brüden werden in eine Kolonne geleitet und rektifiziert. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter den identischen Druckbedingungen wie die Verdampferzone betrieben. Die in den Brüden enthaltenen Diamine werden hierbei abgetrennt und wieder der Verdampferzone zugeführt. Es ist auch möglich, die Diamine der nachfolgenden Polymerisationszone zuzuführen. Der anfallende rektifizierte Wasserdampf wird am Kopf der Kolonne entnommen.

Das erhaltene Präpolymere, das entsprechend seinem Umsetzungsgrad im wesentlichen aus niedermolekularem Polyamid und gegebenenfalls restlichen Mengen an nicht umgesetzten Salzen besteht, wird in eine Polymerisationszone geleitet. In der Polymerisationszone wird die anfallende Schmelze bei einer Temperatur von 250 bis 330°C, insbesondere 270 bis 310°C, und unter einem Überdruck von 1 bis 10 bar, insbesondere 2 bis 6 bar, polykondensiert. Vorteilhaft werden die hierbei freiwerdenden Dämpfe zusammen mit den obengenannten Brüden in der Kolonne rektifiziert, vorzugsweise hält man in der Polykondensationszone eine Verweilzeit von 5 bis 30 Minuten ein. Das so erhaltene Polyamid-Präpolymere, das in der Regel eine Viskositätszahl von 40 bis 80 ml/g, bevorzugt von 50 bis 75 ml/g, gemessen an einer 0,5 gew.-%igen Lösung in 96%iger Schwefelsäure bei 23°C, aufweist, wird kontinuierlich aus der Kondensat ionszone entnommen.

Nach einer bevorzugten Arbeitsweise leitet man das so erhaltene Polyamid-Präpolymere schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat wird bei etwa 20°C über dem Schmelzpunkt des Polyamids (im Falle von Polyhexamethylenadipamid bei etwa 280°C), bevorzugt in einem Doppelschneckenextruder aufgeschmolzen und mit der Carbonsäure (Komponente B) und gegebenenfalls der Komponente C) gemischt, als Strang ausgetragen, gekühlt und granuliert.

In einer besonders bevorzugten Ausführungsform ist es auch möglich, die Komponente B) und gegebenenfalls C) schon in den Entgasungsextruder zu geben, wobei in diesem Fall der Entgasungsextruder üblicherweise mit geeigneten Mischelementen, wie Kneter, ausgestattet ist. Anschließend wird ebenfalls als Strang extrudiert, gekühlt und granuliert.

Dieses Granulat wird in fester Phase unter Inertgas kontinuierlich oder diskontinuierlich bei einer Temperatur unterhalb des Schmelzpunktes, z.B. von 170 bis 240°C, bis zur gewünschten Viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas Stickstoff oder insbesondere überhitzter Wasserdampf, vorteilhaft der am Kopf der Kolonne anfallende Wasserdampf verwendet wird.

Die Viskositätszahl, gemessen an einer 0,5 gew.-%igen Lösung in 96%iger Schwefelsäure bei 23°C, liegt nach der Nachkondensation in fester Phase im allgemeinen im Bereich von 100 bis 500 ml/g, vorzugsweise von 120 bis 200 ml/g.

Als Verzweigungsverbindungen (Komponente B) eignen sich alle mehrfunktionellen Carbonsäuren, wobei die Anzahl n der freien Carbonsäuregruppen 3 < n < 10 , vorzugsweise 3 oder 4 beträgt.

Derartige Carbonsäuren werden in Mengen von 0,3 bis 6, bevorzugt 0,4 bis 5,8 und insbesondere 0,5 bis 5 Gew % in die Polyamidpräpolymerschmelze eingearbeitet.

Bevorzugt sind Carbonsäuren mit aromatischen und/oder heterocyclischen Kernen. Als Beispiele für derartige Reste seien Benzyl, Naphtyl, Anthracen, Biphenyl, Triphenyl, sowie Heterocyclen wie Pyridin, Bipyridin, Pyrrol, Indol, Furan, Thiophen, Purin, Chinolin, Phenantren, Porphyrin, Phtalocyanin, Naphpthalocyanin genannt.

Als bevorzugte Carbonsäuren seien genannt:
3,5,3',5'-Biphenyltetracarbonsäure,
1,3,5,7-Naphtalintetracarbonsäure,
2,4,6-Pyridintricarbonsäure,
3,5,3',5'-Bipyridyltetracarbonsäure,
3,5,3,',5'-Benzophenontetracarbonsäure,
1,3,6,8-Acridintetracarbonsäure,
wobei
1,3,5-Benzoltricarbonsäure (Trimesinsäure) und
1,2,4,5-Benzoltetracarbonsäure
besonders bevorzugt sind.

Derartige Verbindungen sind im Handel erhältlich oder gemäß den in der DE-A 43 12 182 beschriebenen Verfahren erhältlich.

Als Komponente C) können weitere Zusatzstoffe und Verarbeitungshilfsmittel wie Stabilisatoren, Oxidationsverzögerer, Mittel gegen Wärmezersetzung und Zersetzung durch ultraviolettes Licht, Entformungsmittel, Färbemittel wie Farbstoffe und Pigmente, faser- und pulverförmige Füll- und Verstärkungsmittel, Keimbildungsmittel, Weichmacher usw. mit A) und B) gemischt werden, deren Anteil in der Regel nicht mehr als 80 Gew.-% beträgt, insbesondere nicht mehr als 50 Gew.-%.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern , Glasfasern, amorphe Kieselsäure, Asbest, Calciumsilicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 50 Gew.-%, bevorzugt 20 bis 35 Gew.-%.

Als Keimbildungsmittel können z.B. Talkum, Calciumfluorid, Natriumphenylphosphinat, Aluminiumoxid und feinteiliges Polytetrafluorethylen eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Zur weiteren Verbesserung der Schwerentflammbarkeit können alle für Polyamide bekannten Flammschutzmittel zugegeben werden, insbesondere solche auf Basis von Phosphorverbindungen bzw. roter Phosphor selbst.

Durch das erfindungsgemäße Verfahren werden auf einfache Weise verzweigte, insbesondere hochmolekulare Polyamide erhältlich, die ein wesentlich besseres Fließverhalten bei der Verarbeitung im Vergleich zu den reinen Polyamiden zeigen. Gegenüber den bislang bekannten vernetzten Polyamiden bleibt durch das erfindungsgemäße Verfahren die Kristallinität weitestgehend erhalten, so daß die mechanischen Eigenschaften, insbesondere eine gute Steifigkeit erzielt werden kann.

### Beispiele

### Beispiele 1 bis 4

Polyamid-Präpolymere, hergestellt nach dem in der EP-A 129 195 beschriebenen Verfahren, wobei 669,6 kg eines äquimolaren Adipinsäure/Hexamethylendiamin-Salzes bei 80°C in 330,4 kg Wasser gelöst und kontinuierlich in einem Rohrbündelreaktor mit einem Durchsatz entsprechend einer Polyamidmenge von 50 kg/h bei einer Temperatur von 283°C und einem Druck von 2,8 bar polykondensiert wurden. Die PA 66 Präpolymeren hatten eine Viskositätszahl von 70 ml/g, gemessen an einer 0,5 gew.-%igen Lösung in konzentrierter Schwefelsäure bei 23°C (gemäß ISO 1628).

Die PA 66 Präpolymeren wurden auf einem Zweischneckenextruder bei 300°C aufgeschmolzen und die Schmelze mit den in der Tabelle angegebenen Mengen 1,3,5-Benzoltricarbonsäure versetzt. Die homogenisierte Schmelze wurde extrudiert, gekühlt und granuliert. Die Produkte wurden 8 Stunden in Wasser extrahiert, um nicht umgesetzte Benzoltricarbonsäure zu entfernen. Anschließend wurde die Viskositätszahl (VZ) vor der Nachkondensation bestimmt und die Produkte im Vakuum getrocknet.

Anschließend wurden die Produkte in fester Phase in einem feststehenden Temperrohr (doppelwandig, von außen mit Öl beheiztes Glasrohr von 120 mm Durchmesser und 1000 ml Länge) unter Stickstoff diskontinuierlich bei 200°C auf die in der Tabelle angegebene VZ nachkondensiert.

### Beispiel 5

Die Verfahrensweise entsprach den Beispielen 1 bis 4 , jedoch wurde als Polyamid-Präpolymer ein teilaromatisches Copolyamid (PA 6/6T) der folgenden Zusammensetzung eingesetzt:
- 70 Gew.-%: Einheiten,die sich von Hexamethylendiamin und Terephthalsäure ableiten und
- 30 Gew.-%: Einheiten, die sich von ε-Caprolactam ableiten.

Die Verarbeitungstemperatur bei der Konfektionierung betrug: 320°C.

### Vergleichsbeispiele 1 und 2

Die Verfahrensweise entsprach den Beispielen 1 bis 4, jedoch wurden Mengen an 1,3,5-Benzoltricarbonsäure zugesetzt, welche mit 6,3 Gew.-% (Vergleichsbeispiel 1) und 0,2 Gew.-% (Vergleichsbeispiel 2) höher bzw. niedriger als der beanspruchten Mengenbereiche lagen.

### Vergleichsbeispiele 3 und 4

Die Verfahrensweise entsprach den Beispielen 1 und 5, jedoch wurde kein Vernetzer zugegeben.

### Vergleichsbeispiel 5 (gemäß der Lehre der DE- A 43 12 182)

In einem 10 l Laborautoklaven wurde eine Monomermischung, bestehend aus 19,8 g Trimesinsäure und 3461 g eines äquimolaren Adipinsäure/Hexamethylendiamin-Salzes in 2100 ml Wasser vorgelegt. Die Mischung wurde in 5 Glasröhren mit einem Volumen von 800 ml Inhalt verteilt.

Der Autoklav wurde zunächst über 1 h auf 280°C aufgeheizt, wobei der resultierende Wasserdampfdruck nach Erreichen von 20 bar durch Entspannen überschüssigen Wasserdampfes konstant gehalten. Anschließend wurde bei 280°C innerhalb 1 h auf Normaldruck entspannt. Dann wurden weitere 2 h bei 280°C unter Normaldruck weiterkondensiert, bevor der Autoklav innerhalb von 3 h auf Raumtemperatur abgekühlt wurde.

Das Produkt wurde gemahlen und anschließend 8 h in Wasser extrahiert, um nicht umgesetzte Benzolcarbonsäure zu entfernen.

Eine VZ-Messung entsprechend der Norm ist nicht möglich. Das Produkt ist vernetzt und Somit nicht mehr in H₂SO₄ löslich.

### Vergleichsbeispiel 6 (gemäß DE- A 43 12 182)

In einem 10 l Laborautoklaven wurden 3 kg einer Monomermischung, bestehend aus 138,7 g Trimesinsäure und 3356,1 g eines äquimolaren Adipinsäure/Hexamethyldiamin-Salzes in 2100 ml Wasser vorgelegt. Die Mischung wurde in 5 Glasröhren mit einem Volumen von 800 ml Inhalt verteilt.

Der Autoklav wurde zunächst über 1 h auf 280°C aufgeheizt, wobei der resultierende Wasserdampfdruck nach Erreichen von 20 bar doch Entspannen überschüssigen Wasserdampfes konstant gehalten. Anschließend wurde bei 280°C innerhalb 1 h auf Normaldruck entspannt. Dann wurden weitere 2 h bei 280°C unter Normaldruck weiterkondensiert, bevor der Autoklav innerhalb von 3 h auf Raumtemperatur abgekühlt wurde.

Das Produkt wurde gemahlen und anschließend 8 h in Wasser extrahiert, um nicht umgesetzte Benzolcarbonsäure zu entfernen.

Eine VZ-Messung entsprechend der Norm ist nicht möglich. Das Produkt ist vernetzt und somit nicht mehr in H₂SO₄ löslich

### Meßmethoden

Die Bestimmung des MVI erfolgte gemäß ISO 1133, u.z. für die Beispiele 1-4 und Vergleichsbeispiele 1-3 bzw. 5 und 6 bei 265°C und 3,8 kg Belastung, für Beispiel 5 und Vergleichsbeispiel 4 bei 335°C und 5 kg Belastung.

Als relatives Maß für den Kristallinitätsgrad wurde die spezifische Schmelzwärme H _{krist.} mittels Differential Scanning Colorimetrie (DSC 9900 der Firma DuPont). Die in der Tabelle angegeben Schmelzenthalpien wurden aus der 2. Aufschmelzkurve bestimmt (Aufheizrate 20°C/min).

Die Viskositätszahl wurde gemäß ISO 1628 (0,5 gew%ige Lösung in 96 gew.%iger H₂SO₄ bei 25⁰C) bestimmt.

E-Modul und Zugfestigkeit wurden gemäß DIN 53 455 bestimmt.

Die Zusammensetzungen der Formmassen und die Ergebnisse der Messungen sind der Tabelle zu entnehmen.

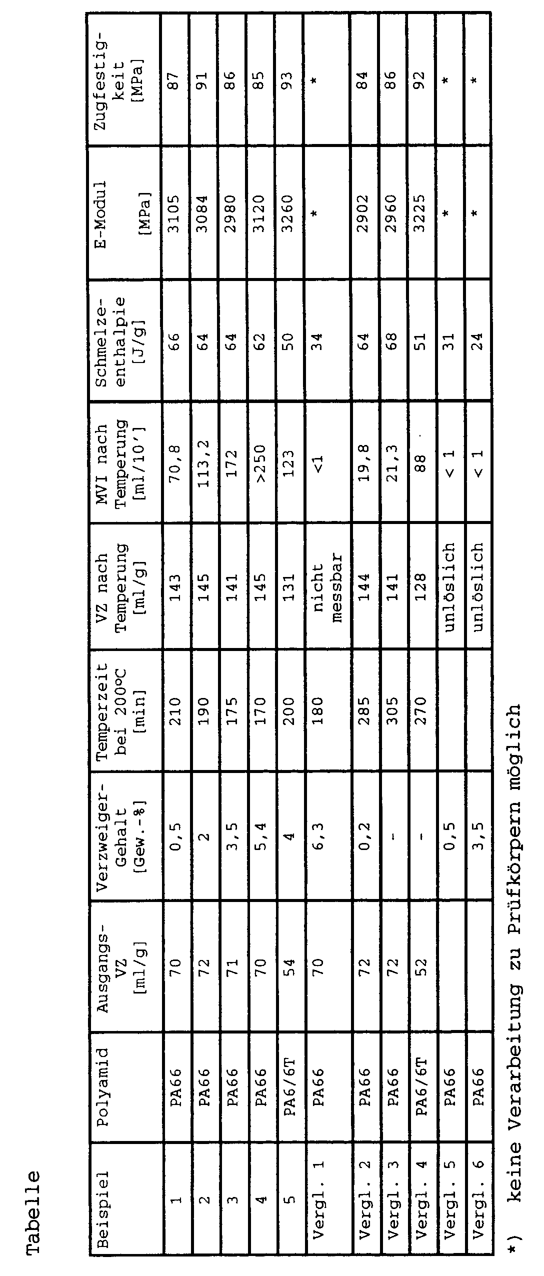

## Patentansprüche

1. Verfahren zur Herstellung von verzweigten Polyamiden, dadurch gekennzeichnet ,daß man
A) 10 bis 99,7 Gew.-% einer Schmelze eines Polyamidpräpolymeren mit einer Viskositätszahl von 40 bis 90 ml/g
mit
B) 0,3 bis 6 Gew.-% einer mehrfunktionellen Carbonsäure, wobei die Anzahl n der freien Carbonsäuregruppen 3 ≤ n ≤ 10 beträgt,
sowie
C) 0 bis 80 Gew.-% weiterer Zusatzstoffe und Verarbeitungshilfsmittel
mischt und anschließend in fester Phase nachkondensiert , wobei die Gewichtsprozente der Komponenten A) bis C) zusammen 100% ergeben.

2. Verfahren nach Anspruch 1, dadurch gekennzeichnet, daß das Polyamid nach der Nachkondensation in fester Phase eine Viskositätszahl von mindestens 100 ml/g aufweist.

3. Verfahren nach den Ansprüchen 1 bis 2, dadurch gekennzeichnet, daß die Anzahl n der freien Carbonsäuregruppen 3 oder 4 beträgt.

4. Verfahren nach den Ansprüchen 1 bis 3, dadurch gekennzeichnet, daß die Komponente B) ausgewählt ist aus der Gruppe 1,3,5 Benzoltricarbonsäure, 1,2,4,5- Benzoltetracarbonsäure, 3,5,3',5'- Biphenyltetracarbonsäure, 1,3,5,7- Naphtalintetracarbonsäure oder deren Mischungen.

5. Verfahren nach den Ansprüchen 1 bis 4, dadurch gekennzeichnet, daß die Komponente A) aus Polyamid 66 oder Polyamid 6/6T oder Polyamid 66/6T oder deren Mischungen aufgebaut ist.

6. Verfahren nach den Ansprüchen 1 bis 5, dadurch gekennzeichnet, daß man 0,4 bis 5,8 Gew.-% der Komponente B) einsetzt.

7. Thermoplastische Formmassen, erhältlich gemäß den Verfahrensbedingungen gemäß den Ansprüchen 1 bis 6.
